# EUROPÄISCHE PATENTSCHRIFT

(11) **EP 2 159 667 B1**
(45) Veröffentlichungstag und Bekanntmachung des Hinweises auf die Patenterteilung: **27.09.2017**
(21) Anmeldenummer: 09167187.5
(22) Anmeldetag: 04.08.2009
(51) Int. Cl.: G06F 1/32, H04L 12/12, G06F 9/445

(54) **Computersystem und Verfahren zum Energie sparenden Betrieb eines Computersystems**
Computer system and method for energy-efficient operation of a computer system
Système informatique et procédé de fonctionnement d'un système informatique économisant l'énergie

(30) Priorität: 26.08.2008 DE 102008039795
(43) Veröffentlichungstag der Anmeldung: 03.03.2010
(73) Patentinhaber: Fujitsu Technology Solutions Intellectual Property GmbH, 80807 München (DE)
(72) Erfinder: Kastl, Peter, 86529 Schrobenhausen (DE); Busch, Peter, 86179 Augsburg (DE); Kammerer, Corinna, 86399 Bobingen (DE); Sausenthaler, Werner, 82278 Althegnenberg (DE); Pelz, Hans-Jürgen, 86391 Stadtbergen (DE)
(74) Vertreter: Epping - Hermann - Fischer

(56) Entgegenhaltungen:
- EP-A1- 1 420 326
- EP-A2- 0 977 112
- US-A1- 2008 077 819
- US-A1- 2008 104 424
- US-B1- 6 408 397
- US-B1- 6 760 850
- US-B1- 6 961 856
- US-B1- 7 073 077

## Beschreibung

Die Erfindung betrifft ein Computersystem aufweisend wenigstens eine Versorgungseinrichtung zur Versorgung des Computersystems mit einer Betriebsenergie, wenigstens eine Systemkomponente mit eine Datenverarbeitungseinrichtung und wenigstens einer Kommunikationseinrichtung. Darüber hinaus betrifft die Anmeldung ein Verfahren zum Energie sparenden Betrieb eines Computersystems, aufweisend eine Versorgungseinrichtung, eine Systemkomponente mit einer Datenverarbeitungseinrichtung und eine Kommunikationseinrichtung.

Derartige Computersysteme sind vielfach bekannt. Insbesondere weisen eine Vielzahl moderner Computersysteme ein Netzteil zur Versorgung eines Mainboards mit einem Prozessor und einem BIOS-Baustein sowie einer damit verbundene Netzwerkkomponente auf. Wird die Netzwerkkomponente auch in einem so genannten Standby- oder Bereitschaftszustand von dem Netzteil des Computersystems mit einer Betriebsspannung versorgt, ist es möglich, das Computersystem über geeignete Anforderungen über ein Kommunikationsnetzwerk aufzuwecken, d. h. in den Betriebszustand zu versetzen. Beispielsweise erlaubt der so genannte ATX-Standard die Versorgung einer Netzwerkkarte in einem Bereitschaftszustand zur Erkennung so genannter Magic Pakets gemäß dem "Wake on LAN" (WoL) Standard.

Solche Computersysteme weisen unter anderem den Vorteil auf, dass sie auch aus der Ferne zu warten sind. Beispielsweise kann ein Systemadministrator eines Firmennetzwerks Computersysteme, die an das Firmennetzwerk angeschlossen sind, aufwecken und aus der Ferne neue Softwarekomponenten auf den Computersystemen installieren. Verfahren und Schnittstellen zur Fernwartung sind insbesondere als Intel Active Management Technology (AMT) oder Alert Standard Format (ASF) bekannt. Auch andere Funktionen werden durch den so genannten Standby-Betrieb ermöglicht. Hierzu sieht insbesondere der ACPI-Standard eine Mehrzahl von Betriebszuständen vor, in denen ein Prozessor des Computersystems zwar angehalten oder abgeschaltet ist, andere Komponenten des Computersystems aber weiterhin mit einer Betriebsenergie versorgt werden.

Nachteilig an solchen Computersystemen ist insbesondere deren verhältnismäßig hoher Energieverbrauch im Bereitschaftszustand. Beispielsweise werden in einem Firmennetzwerk die meisten Computersysteme nachts und am Wochenende nicht genutzt. Solange sie sich jedoch in einem Bereitschaftszustand befinden, verbrauchen sie nach wie vor eine gewisse Leistung, beispielsweise 5 W, um die im Bereitschaftszustand noch aktiven Komponenten wie Netzwerkkarten weiterhin mit einer Betriebsenergie zu versorgen. Darüber hinaus sinkt der Wirkungsgrad der in Computernetzteilen üblicherweise verwendeten Schaltnetzteile bei geringer Auslastung, sodass die Energiebilanz im Bereitschaftszustand noch schlechter ausfällt.

Aus der US 2008/0104424 A1 sind Systeme und Verfahren zum Vermindern von Sicherheitsrisiken bekannt, denen Computersysteme beim Gebrauch von WOL (Wake on LAN) ausgesetzt sind. Gemäß einer Ausgestaltung werden Zeitgeberinformationen, die den Zeitpunkt zum Empfang eines WOL-Pakets betreffen, an einen Zielcomputer geschickt. Die Zeitgeberinformationen können zusätzlich auch Informationen über einen Aufweckzeitpunkt als Reaktion auf den Empfang eines WOL-Pakets enthalten. Der Zielcomputer wertet die Zeitgeberinformationen aus und empfängt das WOL-Paket zu der vorgeschriebenen Zeit und schaltet sich als Antwort darauf zu einem vorbestimmten Zeitpunkt ein.

Eine Aufgabe der vorliegenden Erfindung ist es, ein Computersystem bzw. ein Betriebsverfahren für ein Computersystem zu beschreiben, die die Vorteile eines Bereitschaftszustandes mit einer besonders niedrigen Energieaufnahme verbinden. Eine weitere Aufgabe besteht darin, ein Computersystem so weit wie möglich von einem Energieversorgungsnetz zu trennen, wenn es nicht benötigt wird.

Die Aufgabe wird durch ein Computersystem, aufweisend wenigstens eine mit dem Energieversorgungsnetz koppelbare Versorgungseinrichtung mit einem programmierbaren Steuerbaustein zur Versorgung des Computersystems mit einer Betriebsenergie, wenigstens eine mit der Versorgungseinrichtung gekoppelte Systemkomponente mit einer Datenverarbeitungseinrichtung, wenigstens eine mit einem Kommunikationsnetzwerk koppelbare und mit der Versorgungseinrichtung und der Systemkomponente gekoppelten Kommunikationseinrichtung und wenigstens eine mit der Versorgungseinrichtung gekoppelte und von dieser unabhängig betriebenen Spannungsquelle zur Versorgung des programmierbaren Steuerbausteins gelöst. Dabei ist die Versorgungseinrichtung dazu eingerichtet, in einem Betriebszustand wenigstens die Datenverarbeitungseinheit mit einer Betriebsenergie zu versorgen, in einem Bereitschaftszustand wenigstens die Kommunikationseinrichtung mit einer Betriebsenergie zu versorgen, während die Datenverarbeitungseinrichtung nicht mit einer Betriebsenergie versorgt wird, und in einem Ruhezustand weder die Datenverarbeitungseinrichtung noch die Kommunikationseinrichtung mit einer Betriebsenergie zu versorgen. Der programmierbare Steuerbaustein ist dazu eingerichtet, das Computersystem am Anfang eines vorbestimmten Zeitfensters in den Bereitschaftszustand zu versetzen, wenn das Computersystem sich in dem Ruhezustand befindet.

Der in die Versorgungseinrichtung des Computersystems integrierte, programmierbare Steuerbaustein erlaubt eine flexible Auswahl eines Betriebszustands für das Computersystem, wobei das Computersystem mindestens einen Ruhezustand vorsieht, in dem weder die Kommunikationseinrichtung noch die Datenverarbeitungseinrichtung mit einer Betriebsenergie versorgt wird. Die unabhängig von der Versorgungseinrichtung betriebene Spannungsquelle erlaubt eine Versorgung des programmierbaren Steuerbausteins auch in dem Ruhezustand und somit das Schalten des Computersystems am Anfang eines vorbestimmten Zeitfensters in einen Bereitschaftszustand, in dem zumindest die Kommunikationseinrichtung mit einer Betriebsenergie versorgt wird. Somit kann das Computersystem in dem vorbestimmten Zeitfenster über die Kommunikationseinrichtung angesprochen und gegebenenfalls in den Betriebszustand versetzt werden. Außerhalb des vorbestimmten Zeitfensters verbleibt das Computersystem jedoch in dem Ruhezustand, in dem es keine oder fast keine Energie aus dem Energieversorgungsnetz aufnimmt.

Gemäß einer vorteilhaften Ausgestaltung ist der programmierbare Steuerbaustein des Weiteren dazu eingerichtet, das Computersystem am Ende des vorbestimmten Zeitfensters in den Ruhezustand zu versetzen, wenn es sich in dem Bereitschaftszustand befindet. Durch das Versetzen des Computers in den Ruhezustand am Ende des vorbestimmten Zeitfensters kann die Energieaufnahme des Computersystems weiter verringert werden.

Gemäß einer weiteren vorteilhaften Ausgestaltung ist das Computersystem dadurch gekennzeichnet, dass die Kommunikationseinrichtung in einem ersten Abschnitt des vorbestimmten Zeitfensters ein Bereitschaftssignal über das Kommunikationsnetzwerk an eine vorbestimmte Überwachungseinheit sendet und in einem zweiten Abschnitt des vorbestimmten Zeitfensters auf eine Anforderung der Überwachungseinheit wartet. Durch Senden eines Bereitschaftssignals kann eine Überwachungseinheit darüber informiert werden, dass sich das Computersystem nunmehr in dem vorbestimmten Zeitfenster befindet, in dem beispielsweise eine Fernwartung möglich ist.

Gemäß einer weiteren vorteilhaften Ausgestaltung versorgt die Versorgungseinrichtung die Systemkomponente und/oder die Datenverarbeitungseinrichtung in dem ersten Abschnitt des vorbestimmten Zeitfensters vorübergehend mit einer Betriebsenergie. Durch Versorgung der Systemkomponente und/oder der Datenverarbeitungseinrichtung in dem ersten Abschnitt können Einstellungen oder Programmcode zum Versenden des Bereitschaftssignals zur Verfügung gestellt werden.

Gemäß einer vorteilhaften Ausgestaltung ist der programmierbare Steuerbaustein des Weiteren dazu eingerichtet, die Versorgungseinrichtung im Ruhezustand vollständig von dem Energieversorgungsnetz zu trennen. Durch eine vollständige Trennung der Versorgungseinrichtung von dem Energieversorgungsnetz kann eine Leistungsaufnahme des Computersystems in dem Ruhezustand völlig unterbunden werden.

Gemäß einer weiteren vorteilhaften Ausgestaltung umfasst die Spannungsquelle eine auf der Systemkomponente angeordnete Batteriezelle. Wenn eine auf der Systemkomponente angeordnete Batteriezelle, insbesondere eine so genannte CMOS-Batterie, zur Versorgung des programmierbaren Steuerbausteins verwendet wird, kann auf den Einsatz zusätzlicher Versorgungskomponenten verzichtet werden.

Gemäß einer vorteilhaften Ausgestaltung ist der programmierbare Steuerbaustein dazu eingerichtet, einen Spannungspegel der Spannungsquelle zu überwachen und beim Abfallen des Spannungspegels unter einen vorbestimmten Grenzwert die Versorgungseinrichtung aus dem Ruhezustand in den Bereitschaftszustand oder Betriebszustand zu versetzen oder eine Aktivierung des Ruhezustandes zu verhindern. Durch die Überwachung eines Spannungspegels der Spannungsquelle und gegebenenfalls ein Versetzen der Versorgungseinrichtung in den Bereitschafts- oder Betriebszustand kann ein nachfolgender Start des Computersystems sichergestellt werden.

Die Aufgabe wird ebenso gelöst durch ein Verfahren zum Energie sparenden Betrieb eines Computersystems, aufweisend eine Versorgungseinrichtung mit einem programmierbaren Steuerbaustein, eine Systemkomponente mit einer Datenverarbeitungseinrichtung, eine Kommunikationseinrichtung und eine von der Versorgungseinrichtung unabhängig betriebenen Spannungsquelle. Das Verfahren umfasst die Schritte:
- Versetzen des Computersystems in einen Ruhezustand, in dem weder die Datenverarbeitungseinrichtung noch die Kommunikationseinrichtung von der Versorgungseinheit mit einer Betriebsenergie versorgt wird,
- Versorgen des programmierbaren Steuerbausteins durch die unabhängig betriebene Spannungsquelle in dem Ruhezustand,
- wenn das Computersystem sich in dem Ruhezustand befindet, am Anfang eines vorbestimmten Zeitfensters Versetzen des Computersystems durch den Steuerbaustein in einen Bereitschaftszustand, in dem zumindest die Kommunikationseinrichtung von der Versorgungseinrichtung mit einer Betriebsenergie versorgt wird, während die Datenverarbeitungseinrichtung nicht mit einer Betriebsenergie versorgt wird, und
- in dem vorbestimmten Zeitfenster Überwachen eines Kommunikationsnetzwerks auf an das Computersystem gerichtete Anforderungen durch die Kommunikationseinrichtung.

Weitere Vorteile und vorteilhafte Ausgestaltungen der Erfindung sind in den Patentansprüchen und der nachfolgenden Beschreibung von Ausführungsbeispielen offenbart.

Die verschiedene Ausführungsbeispiele der Erfindung werden nachfolgend anhand von Figuren näher erläutert. In den Figuren zeigen:
- Figur 1: eine schematische Darstellung eines Computersystems gemäß einer Ausgestaltung der Erfindung,
- Figur 2: einen Schaltplan einer Netzeingangsschaltung einer Versorgungseinrichtung,
- Figur 3: ein Diagramm einer Leistungsaufnahme eines Computersystems gemäß einer Ausgestaltung der Erfindung,
- Figur 4: ein Zustandsdiagramm eines Computersystems gemäß einer Ausgestaltung der Erfindung,
- Figur 5: ein Ablaufdiagramm eines Verfahrens zum Starten eines Computersystems und
- Figur 6: ein Ablaufdiagramm eines Verfahrens zum Stoppen eines Computersystems.

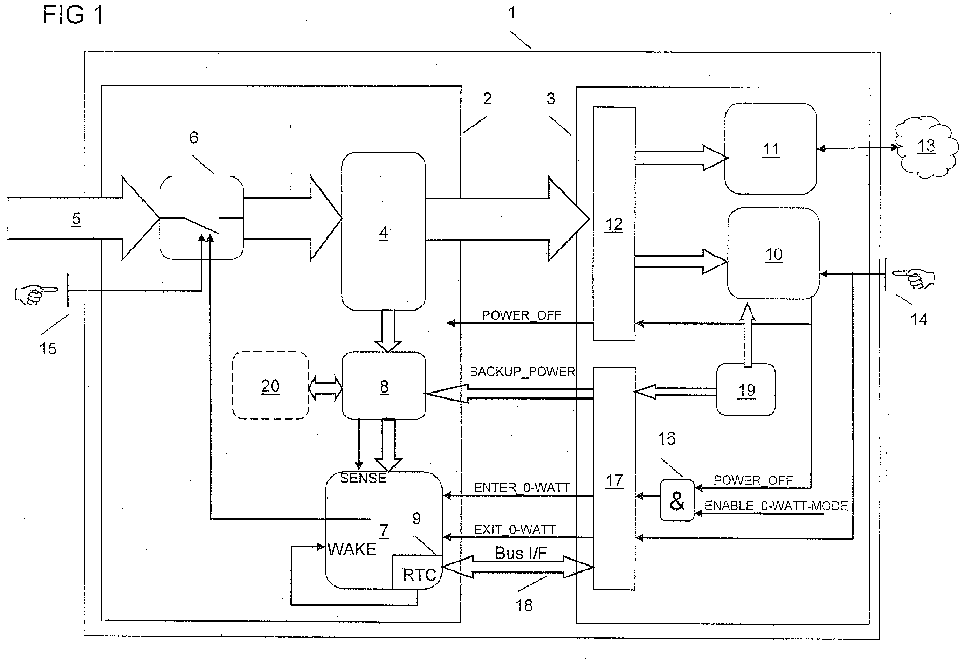

Figur 1 zeigt eine schematische Darstellung eines Computersystems 1. Das Computersystem 1 umfasst eine Versorgungseinrichtung 2 und eine Systemkomponente 3.

Beispielsweise handelt es sich bei der Versorgungseinrichtung 2 um ein Computernetzteil mit einem oder mehreren integrierten Schaltwandlern 4. Der Schaltwandler 4 dient zur Umwandlung einer primären Wechselspannung eines Energieversorgungsnetzes 5 in eine oder mehrere sekundäre Gleichspannungen zum Betrieb des Computersystems 1. Um die Verlustleistung der Versorgungseinrichtung 2 im abgeschalteten Zustand möglichst gering zu halten, ist zwischen dem Energieversorgungsnetz 5 und dem Schaltwandler 5 eine Schaltkomponente 6 angeordnet. Bei der Schaltkomponente 6 kann es sich beispielsweise um ein Relais oder ein Halbleiterschaltelement handeln. Des Weiteren weist die Versorgungseinrichtung 2 einen programmierbaren Steuerbaustein 7 auf. Der programmierbare Steuerbaustein 7 wird von einer Spannungsquelle 8 versorgt. Beispielsweise handelt es sich bei der Spannungsquelle 8 um eine einfache Schaltung, die eine konstante Spannung aus einer Spannung einer BIOS-Batterie oder sonstigen Energiequelle erzeugt. Alternativ kann auch ein sehr einfach aufgebauter und hocheffizienter Schaltwandler zur ausschließlichen Versorgung des Steuerbausteins 7 aus dem Energieversorgungsnetz 5 in der Versorgungskomponente 2 vorgesehen sein. Bei dem programmierbaren Steuerbaustein 7 handelt es sich bevorzugt um einen Mikrocontroller mit einer besonders geringen Leistungsaufnahme, der über eine eingebaute Echtzeituhr 9 oder einen anderen Zeitgeber verfügt. Zu Beginn eines vorbestimmten Zeitfensters erzeugt die Echtzeituhr 9 ein Aufwecksignal WAKE, das den programmierbaren Steuerbaustein 7 aufweckt und ein Einschalten der Schaltkomponente 6 bewirkt. Auf diese Weise kann der Schaltwandler 4 zu einem vorbestimmten Zeitpunkt mit dem Energieversorgungsnetz 5 verbunden werden. Optional überwacht der Steuerbaustein 7 einen weiteren Steuereingang SENSE, der die Größe einer Spannung der Spannungsquelle 8 oder die Ladung eines damit verbundenen Energiespeichers kennzeichnet.

Die Systemkomponente 3, beispielsweise ein Mainboard des Computersystems 1, umfasst im Ausführungsbeispiel eine Datenverarbeitungseinrichtung 10 sowie eine Kommunikationseinrichtung 11. Bei der Datenverarbeitungseinrichtung 10 kann es sich beispielsweise um Teile oder den gesamten Chipsatz der Systemkomponente 3 oder auch einen darauf angeordneten Prozessor oder BIOS-Baustein handeln. Bei der Kommunikationseinrichtung 11 kann es sich beispielsweise um eine eingebaute Netzwerkschnittstelle der Systemkomponente 3, eine zusätzliche Netzwerkkarte oder einen so genannten System Management Baustein (SMB) handeln, der auch in einem Bereitschaftszustand des Computersystems 1 mit einer Betriebsenergie versorgt wird. Die Datenverarbeitungseinrichtung 10 und die Kommunikationseinrichtung 11 werden über einen Stromversorgungsanschluss 12, der beispielsweise gemäß dem ATX- oder BTX-Standard ausgeführt ist, von der Versorgungseinrichtung 2 mit einer Betriebsenergie versorgt. Solange die Kommunikationseinrichtung 11 mit einer Betriebsenergie versorgt wird, überwacht sie insbesondere ein Kommunikationsnetzwerk 13 auf Anfragen, die an das Computersystem 1 gerichtet sind. Bei dem Kommunikationsnetzwerk 13 kann es sich beispielsweise um ein lokales Datennetzwerk, das Internet oder auch um ein Telefonnetzwerk handeln. Gemäß einer alternativen Ausgestaltung, kann die Kommunikationseinrichtung 11 aus dem Kommunikationsnetzwerk auch eine Energie zum Betrieb des programmierbaren Steuerbausteins 7 entnehmen. In dieser Ausgestaltung kann auf andere Energiequellen, insbesondere Batteriezellen, verzichtet werden. Alternativ kann eine andere Energiequelle auch durch die aus dem Kommunikationsnetzwerk entnommene Energie unterstützt oder entlastet werden.

Zum manuellen Starten und Stoppen des Computersystems weist das Computersystem 1 ein erstes Schaltelement 14 und ein zweites Schaltelement 15 auf. Bei dem ersten Schaltelement 14 handelt es sich beispielsweise um einen so genannten Fronttaster, mit dem ein Benutzer das Computersystem 1 ein- oder ausschalten kann. In Abhängigkeit von beispielsweise in einem BIOS-Baustein hinterlegten Voreinstellungen bewirkt ein Betätigen des ersten Schaltelements 14 ein Ausschalten des Computersystems in einen Ruhezustand, in dem der programmierbare Steuerbaustein 7 die Versorgungseinrichtung 2 von dem Energieversorgungsnetz 5 isoliert. Alternativ kann ein Abschalten des Computersystems 1 mittels des ersten Schaltelements 14 auch dazu führen, dass der programmierbare Steuerbaustein 7 die Versorgungseinrichtung 2 und damit das Computersystem 1 in einen so genannten Bereitschaftszustand versetzt, in dem die Kommunikationseinrichtung 11 weiterhin mit einer Betriebsenergie versorgt wird. Befindet sich das Computersystem 1 bereits in einem Ruhe- oder Bereitschaftszustand, führt eine weitere Betätigung des ersten Schaltelements 14 dazu, dass das Computersystem 1 in einen Betriebszustand versetzt wird. Hierzu schließt der programmierbare Steuerbaustein 7 nötigenfalls das Schaltelement 6 und aktiviert damit den Schaltwandler 4. Nachfolgend werden die Datenverarbeitungseinrichtung 10 und gegebenenfalls weitere Komponenten der Systemkomponente 3, insbesondere die Kommunikationseinrichtung 11, mit einer Betriebsenergie versorgt.

Alternativ zu dem ersten Schaltelement 14 kann ein Abschaltsignal auch von der Datenverarbeitungseinrichtung 10 erzeugt werden. Dies ist beispielsweise bei der Abschaltung des Computersystems mittels Software erforderlich. Die erforderlichen Steuersignale, im Ausführungsbeispiel ein so genanntes POWER_OFF sowie ein ENABLE_0_WATT_MODE werden über logische Komponente, im Ausführungsbeispiel ein UND-Gatter 16, miteinander Verknüpft und an einer Steuerschnittstelle 17 bereitgestellt. Sie werden durch die Datenverarbeitungsvorrichtung 10 oder eine andere Funktionseinheit der Systemkomponente 3 erzeugt. Beispielsweise kann ein Chipsatz eines Computermainboards einen so genannten General Purpose Output eines Ein-Ausgabebausteins (GPIO) entsprechend programmieren, um die oben genannten Steuersignale zu erzeugen.

Die Steuerschnittstelle 17 ist mit der Versorgungseinrichtung 2 und insbesondere mit dem programmierbaren Steuerbaustein 7 verbunden. Alternativ oder zusätzlich kann der programmierbare Steuerbaustein 7 auch über eine Busschnittstelle 18, beispielsweise einen so genannten System Management Bus (SMM) mit der Systemkomponente 3 und den darauf angeordneten Komponenten verbunden werden.

Das zweite Schaltelement 15 dient zum Schalten der Schaltkomponente 6 unabhängig von dem programmierbaren Steuerbaustein 7. Insbesondere in dem Fall, dass die Spannungsquelle 8 keine oder keine hinreichende Spannung mehr erzeugt, um den Steuerbaustein 7 zu betreiben oder die Schaltkomponente 6 zu schalten, kann das Computersystem 1 somit manuell aus dem Ruhezustand zurück in den Bereitschafts- oder Betriebszustand geschaltet werden.

Im Ausführungsbeispiel umfasst die Steuerschnittstelle 17 zusätzlich einen Anschluss zum Übertragen einer Spannung einer BIOS-Batterie 19 der Systemkomponente 3. Die BIOS-Batterie 19 dient bei konventionellen Computersystemen dazu, Einstellungen eines BIOS-Bausteins auch bei Unterbrechung einer Versorgungsspannung zu sichern und eine die Systemkomponente 3 integrierte Echtzeituhr weiter zu betreiben. In der in der Figur 1 dargestellten Ausgestaltung wird die Spannung der BIOS-Batterie 19 zusätzlich der Spannungsquelle 8 zur Versorgung des programmierbaren Steuerbausteins 7 zugeführt. Somit kann auf eine gesonderte Batterie in der Versorgungseinrichtung 2 verzichtet werden. In dem Fall, dass eine gesteigerte Belastung der BIOS-Batterie 19 der Systemkomponente 3 vermieden werden soll oder eine solche Batterie nicht auf der Systemkomponente 3 angeordnet ist, kann jedoch alternativ oder zusätzlich auch eine Zusatzbatterie 20 in der Versorgungseinrichtung 2 vorgesehen sein. In einer bevorzugten Ausgestaltung wird die Zusatzbatterie im eingeschalteten Zustand von dem Schaltwandler 4 geladen.

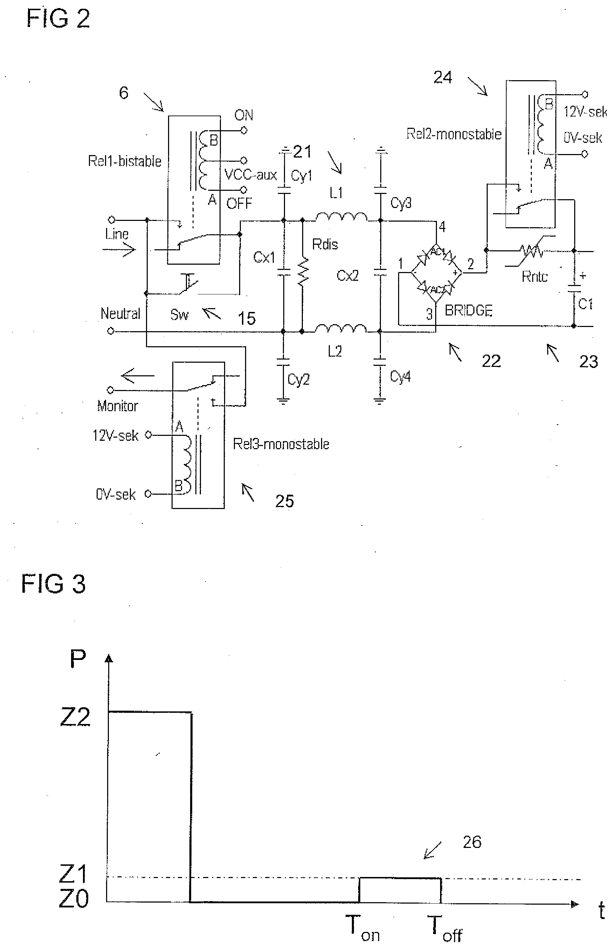

Figur 2 zeigt eine beispielhafte Ausgestaltung einer Netzeingangsschaltung einer Versorgungseinrichtung 2. Die Schaltung gemäß Figur 2 umfasst eine Schaltkomponente 6 in Form eines bistabilen Relais, ein Schaltelement 15, einen Netzeingangfilter 21, einen Gleichrichter 22 in Form einer Graetzbrücke und ein Strombegrenzungselement 23 in Form eines Heißleiters Rntc. Das Strombegrenzungselement 23 kann mittels eines zweiten Relais 24 überbrückt werden, um Leistungsverluste an dem Strombegrenzungselement 23 im Betrieb zu verhindern. Hinter dem Strombegrenzungselement 23 ist ein Speicherkondensator C1 angeordnet, der zur Speisung eines in der Figur 2 nicht dargestellten Schaltwandlers dient. Die Schaltung gemäß Figur 2 weist zusätzlich einen Schaltausgang für einen Monitor auf, der mittels eines dritten Relais 25 in einem Betriebszustand der Versorgungseinrichtung 2 hinzugeschaltet wird.

Auf die Funktion und Ansteuerung der dargestellten Schaltung wird hier nicht weiter eingegangen. Aus dem Schaltplan der Figur 2 ist jedoch ersichtlich, dass durch korrekte Ansteuerung der Relais 6, 24 und 25 eine Leistungsaufnahme der Versorgungseinrichtung 2 in einem Ruhezustand vollständig unterbunden werden kann, in dem ein Lastpfad vom Netzeingang zum Speicherkondensator C1 unterbrochen wird.

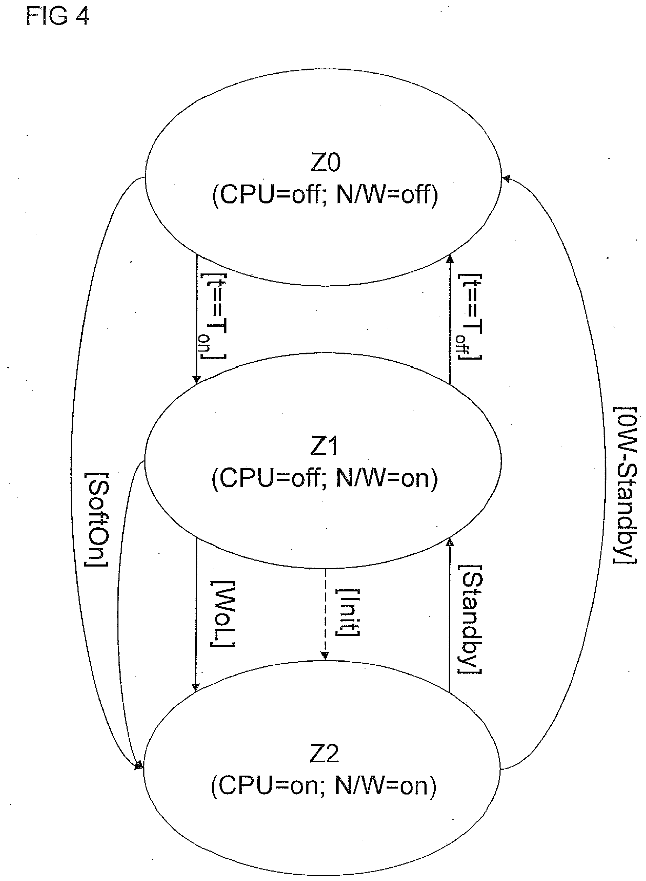

In den Figuren 3 und 4 ist eine Leistungsaufnahme bzw. ein Zustandsdiagramm des Computersystems 1 dargestellt. Demnach kann sich das Computersystem 1 bzw. die ihm zugeordnete Versorgungseinrichtung 2 in einem von wenigstens drei unterschiedlichen Zuständen Z0, Z1 oder Z2 befinden. In einem Ruhezustand Z0 befindet sich das Computersystem 1 in einem Zustand, in dem seine Energieaufnahme minimiert wird. In einer bevorzugten Ausgestaltung wird die Versorgungseinrichtung 2 vollständig von einem Energieversorgungsnetz 5 getrennt. Dabei werden in dem Zustand Z0 weder die Datenverarbeitungseinrichtung 10 noch die Kommunikationseinrichtung 11 mit einer Betriebsspannung versorgt. Dies entspricht beispielsweise dem so genannten ACPI-Zustand G3.

In dem Bereitschaftszustand Z1 werden ausgewählte Komponenten des Computersystems 1 von der Versorgungseinrichtung 2 mit einer Betriebsenergie versorgt. Gemäß dem Ausführungsbeispiel wird die Kommunikationseinrichtung 11 mit einer Betriebsenergie versorgt, während die Datenverarbeitungseinrichtung 10 nicht mit einer Betriebsenergie versorgt wird. In anderen Ausgestaltungen und Computersystemen können auch andere Hilfskomponenten mit einer Betriebsenergie versorgt werden. Beispielsweise ist es möglich, in dem Bereitschaftszustand Z1 eine Tastatur mit einer Betriebsenergie zu versorgen, um ein Einschalten des Computersystems 1 mittels eines Tastendrucks zu ermöglichen. Somit entspricht der Bereitschaftszustand Z1 beispielsweise einem der ACPI-Zustände S3 bis S5.

In dem Betriebszustand Z2 ist das Computersystem 1 weitgehend einsatzbereit. Insbesondere werden alle wesentlichen Komponenten des Computersystems 1, wie beispielsweise die Datenverarbeitungseinrichtung 10 und die Kommunikationseinrichtung 11, mit einer Betriebsspannung versorgt. Dabei können einzelne Komponenten unabhängig von dem globalen Betriebszustand Z2 entscheiden, ob nicht benötigte Subkomponenten vorübergehend deaktiviert werden, um deren Stromverbrauch zu reduzieren. Beispielsweise ist es möglich, zusätzliche Prozessorkerne oder Cache-Speicher zeitweise oder vollständig zu deaktivieren, wenn diese nicht benötigt werden. Dies entspricht beispielsweise den ACPI-Zuständen S0 bis S2.

Wie aus der Figur 3 deutlich wird, nimmt das Computersystem 1 in den Zuständen Z0, Z1 und Z2 unterschiedlich viel elektrische Energie aus einem Energieversorgungsnetz 5 auf. Insbesondere benötigt das Computersystem 1 in dem Ruhezustand Z0 keine oder so gut wie keine elektrische Leistung. Daher ist es vorteilhaft, das Computersystem 1 so oft und so lange wie möglich in den Zustand Z0 zu versetzen.

In dem in der Figur 3 dargestellten Beispiel befindet sich das Computersystem 1 zunächst in dem Betriebszustand Z2, in dem die Leistungsaufnahme am größten ist. Beispielsweise arbeitet ein Benutzer zu dieser Zeit an dem Computersystem 1. Nach dem Abschalten des Computersystems 1, beispielsweise durch Betätigen des ersten Schaltelements 14, wird es in den Ruhezustand Z0 versetzt, in dem es bevorzugt durch die Schaltkomponente 6 von dem Energieversorgungsnetz 5 getrennt wird. Zu einem Zeitpunkt Tₒₙ wird das Computersystem 1 von dem programmierbaren Steuerbaustein 7 in den Bereitschaftszustand Z1 versetzt. In dem Bereitschaftszustand Z1 ist beispielsweise eine Fernwartung des Computersystems 1 durch einen Systemadministrator möglich. Am Ende eines vorbestimmten Zeitfensters 26, in der Figur 3 zum Zeitpunkt T_{off}, wird das Computersystem 1 zurück in den Ruhezustand Z0 versetzt.

In dem durch den Einschaltzeitpunkt Tₒₙ und den Ausschaltzeitpunkt T_{off} gegebenen Zeitfenster 26 kann das Computersystem 1 aus der Ferne gewartet werden. Beispielsweise ist es möglich, dieses Zeitfenster 26 auf einen bevorzugt zur Wartung des Computersystems 1 verwendeten Zeitraums, beispielsweise von Mitternacht bis ein Uhr morgens, zu legen.

Figur 4 zeigt die Übergänge zwischen den Betriebszuständen Z0, Z1 und Z2. Demnach wird das Computersystem 1 aus dem Ruhezustand Z0 in den Bereitschaftszustand Z1 versetzt, wenn der programmierbare Steuerbaustein 7 feststellt, dass der Beginn des Zeitfensters 26 erreicht wurde. Umgekehrt wird das Computersystem 1 zurück in den Ruhezustand Z0 versetzt, wenn das Ende des vorbestimmten Zeitfensters 26 erreicht wurde. Aus dem Bereitschaftszustand Z1 kann das Computersystem 1 beispielsweise durch ein so genanntes Wake-On LAN Ereignis WoL in den Betriebszustand Z2 versetzt werden. Beispielsweise kann ein Systemadministrator durch Absenden einer Wartungsanfrage das Computersystem 1 in den Betriebszustand Z2 schalten, um Softwareupdates oder Konfigurationsänderungen vorzunehmen. Ebenso kann das Computersystem 1 durch eine Softwareanforderung Standby zurück in den Bereitschaftszustand Z1 versetzt werden, beispielsweise wenn ein Systemadministrator seine Wartungsarbeiten abgeschlossen hat.

Gemäß einer nachfolgend beschriebenen, alternativen Ausgestaltung kann das Computersystem 1 zu Beginn des vorbestimmten Zeitfensters 26 mittels eines Steuersignals Init vorübergehend in den Betriebszustand Z2 versetzt werden, um die Kommunikationskomponente 11 zu initialisieren. Beispielsweise kann eine BIOS- oder sonstige Softwarekomponente durch die Datenverarbeitungseinrichtung 10 ausgeführt werden, um ein so genanntes Heartbeat-Signal über die Kommunikationseinrichtung 11 auszusenden.

Schließlich kann das Computersystem 1 durch Betätigen des ersten Schaltelements 14 und Auslösen eines entsprechenden Steuersignals SoftOn manuell von dem Ruhezustand Z0 oder dem Bereitschaftszustand Z1 in den Betriebszustand Z2 versetzt werden. Umgekehrt kann das Computersystem 1 durch Betätigen des ersten Schaltelements 14 mittels eines Steuersignals 0W-Standby zurück in den Ruhezustand Z0 versetzt werden.

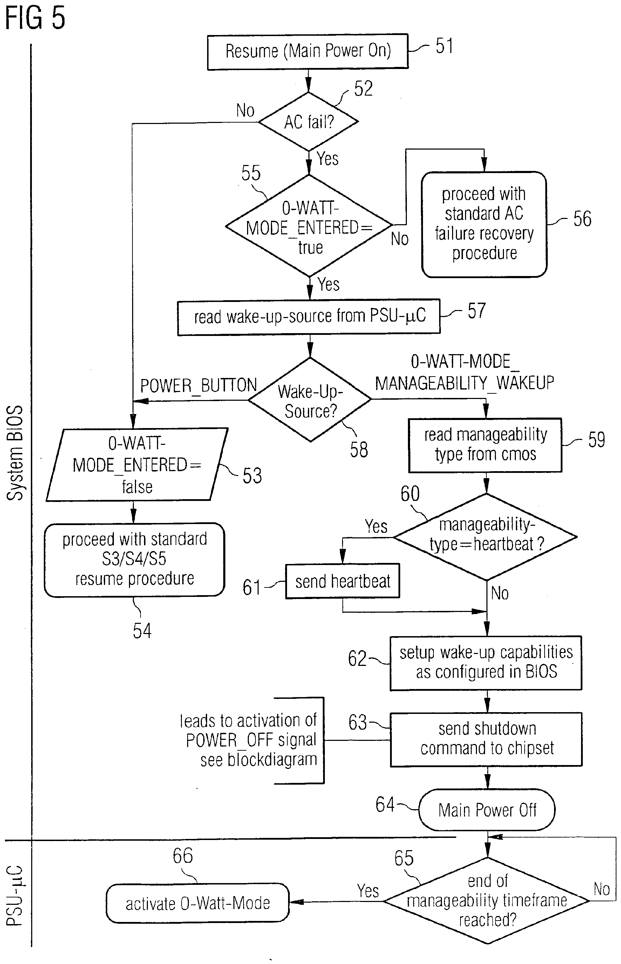

Figur 5 zeigt ein Ablaufdiagramm eines Verfahrens zum Starten eines Computersystems 1. In einem ersten Schritt 51 wird das Starten des Computersystems 1 erkannt, beispielsweise durch Erkennen einer Betriebsspannung. In einer nachfolgenden Überprüfung 52 wird abgefragt, ob das in Schritt 51 erkannte Einschaltsignal einen normalen Startvorgang, beispielsweise mittels des ersten Schaltelements 14 aus dem Bereitschaftszustand Z1, oder einen durch eine Netztrennung, beispielsweise durch den Steuerbaustein 7 oder einen Netzausfall, verursachten Neustart nach einer Netzrückkehr darstellt.

Wurde der Startvorgang nicht durch eine Netzrückkehr verursacht, wird in Schritt 53 in einem geeigneten Steuerregister festgehalten, dass sich das Computersystem 1 nicht mehr in dem Ruhezustand Z0 befindet. Nachfolgend wird das Computersystem im Schritt 54 durch Ausführen einer normalen Startsequenz in den Betriebszustand Z2 versetzt. Beispielsweise kann BIOS-Programmcode zum Laden und Booten eines Betriebssystems von einem Speichermedium ausgeführt werden. Alternativ oder zusätzlich können auch die aus dem ACPI-Standard bekannten Mechanismen zum Fortsetzen des Betriebs des Computersystems nach zwischenzeitlichem Schalten in einen ACPI-Zustand S3 bis S5 durchgeführt werden.

Wird in Schritt 52 jedoch erkannt, dass das Computersystem 1 nach einer Netzrückkehr gestartet wurde, wird durch eine nachfolgenden Abfrage eines Steuerregisters im Schritt 55 überprüft, ob sich das Computersystem 1 vor Unterbrechung der Versorgungsspannung in dem Ruhezustand Z0 befand. Ist dies nicht der Fall, handelt es sich um eine Netzstörung, beispielsweise einen Stromausfall. Im Schritt 56 wird daher eine normale Startprozedur zum Wiedereinschalten des Computersystems 1 nach einem Netzausfall durchgeführt. Abhängig von in einer BIOS-Komponente gespeicherten Systemeinstellung kann das Computersystem 1 dabei in den Ruhezustand Z0, den Bereitschaftszustand Z1 oder den Betriebszustand Z2 versetzt werden.

Wird in Schritt 55 jedoch erkannt, dass sich das Computersystem zuvor in dem Ruhezustand Z0 befand, wird in einem nachfolgenden Schritt 57 die Quelle des Startsignals abgefragt. In einem Schritt 58 wird überprüft, ob das Startsignal durch das erste Schaltelement 14 gegeben wurde. In diesem Fall wird das Verfahren wie oben beschrieben mit den Schritten 53 und 54 fortgesetzt. Wurde das Startsignal jedoch durch den programmierbaren Steuerbaustein 7 zu Beginn des Zeitfensters 26 erzeugt, wird in einem nachfolgenden Schritt 59 überprüft, welche Wartungsmechanismen in dem vorbestimmten Zeitfenster zur Verfügung gestellt werden sollen.

Insbesondere wird in Schritt 60 überprüft, ob eine so genannte Heartbeat-Funktionalität gewünscht ist. Ist die Heartbeat-Funktionalität gewünscht, wird in Schritt 61 die Kommunikationseinrichtung 11 dazu verwendet, ein vorbestimmtes Signal von dem Computersystem 1 an eine unabhängige Überwachungseinheit in dem Kommunikationsnetz 13 zu übermitteln.

Wurde eine Heartbeat-Funktionalität nicht gewünscht bzw. wurde ein Heartbeat-Signal in Schritt 61 bereits ausgesendet, wird das Verfahren in Schritt 62 fortgesetzt. In Schritt 62 werden Aufwachoptionen konfiguriert, wie sie beispielsweise in einem BIOS-Baustein voreingestellt sind, indem entsprechende Daten aus einem Steuerregister abgerufen und in einem Chipsatz hinterlegt werden. Beispielsweise werden die Kommunikationseinrichtung 11 und gegebenenfalls andere zum Aufwecken geeignete Komponenten des Computersystems 1 zur Versorgung in dem Bereitschaftszustand Z1 ausgewählt.

In einem nachfolgenden Schritt 63 wird das Computersystem 1 in einen Bereitschaftszustand Z1 versetzt, beispielsweise den ACPI-Zustand S4 oder S5. In diesem Zustand werden nur einzelne Einrichtungen des Computersystems, beispielsweise nur die Kommunikationseinrichtung 11, mit einer Betriebsenergie versorgt, um Anforderungen der Überwachungseinheit über das Kommunikationsnetzwerk 13 zu erkennen. Wurde das Datenverarbeitungselement 10 vorübergehend mit einer Betriebsenergie versorgt, beispielsweise um eine Heartbeat-Signal auszusenden, wird hierzu ein geeignetes Steuersignal von der Systemkomponente 3 an die Versorgungseinrichtung 2 übermittelt. Dementsprechend wird in Schritt 64 die Datenverarbeitungseinrichtung 10 von der Versorgungseinrichtung 2 nicht länger mit einer Betriebsenergie versorgt.

In Schritt 65 wird überprüft, ob das Ende des vorbestimmten Zeitfensters 26 erreicht wurde. Solange das Ende des Zeitfensters 26 nicht erreicht wurde, wird eine Schleifenfunktion ausgeführt und das Computersystem 1 verbleibt im Bereitschaftszustand Z1. Ist das Ende des vorbestimmten Zeitfensters erreicht, wird das Computersystem 1 zurück in den Ruhezustand Z0 geschaltet und die Versorgungseinrichtung 2 beispielsweise in einem Schritt 66 von dem Energieversorgungsnetz 5 getrennt.

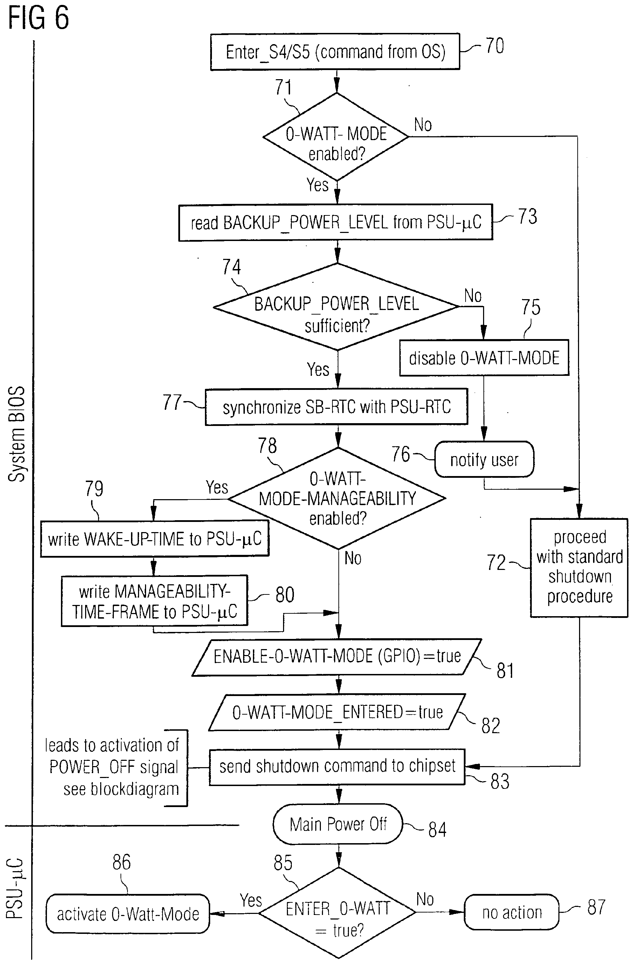

Figur 6 zeigt ein Ablaufdiagramm eines Verfahrens zum Stoppen eines Computersystems 1. In einem ersten Schritt 70 wird ein Steuersignal zum Abschalten des Computersystems 1 von dessen Betriebssystem oder einer anderen Softwarekomponente erzeugt. Beispielsweise kann durch Betätigung des ersten Schaltelements 14 ein Steuersignal zum Versetzen des Computersystems 1 in einen der ACPI Zustände S4 oder S5 ausgelöst werden. In einem nachfolgenden Schritt 71 wird überprüft, ob ein Energie sparender Ruhezustand Z0 in der gegenwärtigen Konfiguration des Computersystems 1 gewünscht ist. Ist dies nicht der Fall, wird in Schritt 72 die normale Abschaltprozedur durchgeführt und die Versorgungseinrichtung 2 über das Herunterfahren des Computersystems 1 informiert.

Alternativ, d. h. wenn der Ruhezustand Z0 gewünscht ist, wird im Schritt 73 ein Spannungspegel der Spannungsquelle 8 ermittelt. Beispielsweise überwacht der programmierbare Steuerbaustein 7 den Ladezustand einer BIOS-Batterie 19. Im Schritt 74 wird überprüft, ob die gemessene Spannung der Spannungsquelle 8 ausreicht, um den programmierbaren Steuerbaustein 7 während eines Ruhezustands Z0 zu versorgen und/oder ein Wiedereinschalten durch den programmierbaren Steuerbaustein 7 sicherzustellen. Ist dies nicht der Fall, wird in einem Schritt 75 ein Steuerbit zur Aktivierung des Ruhezustands Z0 deaktiviert und in einem optionalen Zusatzschritt 76 der Benutzer hierüber informiert. Danach wird das Verfahren wie oben beschrieben mit Schritt 72 fortgesetzt.

Anderenfalls, d. h. wenn die Spannung der Spannungsquelle 8 ausreichend ist, um den programmierbaren Steuerbaustein 7 während des Ruhezustands Z0 mit einer Betriebsenergie zu versorgen, wird in einem Schritt 77 eine Echtzeituhr 9 des programmierbaren Steuerbausteins 7 mit einer Echtzeituhr der Systemkomponente 3 abgeglichen. Dies führt dazu, dass nach dem Abschalten des Computersystems 1 stets die korrekte Uhrzeit in dem programmierbaren Steuerbaustein 7 hinterlegt ist, auch wenn durch einen Benutzer oder durch eine automatische Netzwerkkonfiguration die Uhrzeit des Computersystems 1 geändert wurde. Sofern die Echtzeituhr 9 anderweitig aktualisiert wird oder keine besonderen Anforderungen an die Genauigkeit des Zeitfensters 26 gestellt werden, kann der Schritt 77 jedoch auch entfallen oder nur in unregelmäßigen Zeitabständen durchgeführt werden.

In einem nachfolgenden Schritt 78 wird überprüft, ob eine Managementfunktion in dem Ruhezustand Z0 gewünscht ist. Ist dies der Fall, wird ein Zeitgeber in einem Schritt 79 programmiert, der den programmierbaren Steuerbaustein 7 zu Beginn eines vorbestimmten Zeitfensters 26 aufweckt. Beispielsweise kann die Echtzeituhr 9 zum Zeitpunkt Tₒₙ ein Interruptsignal erzeugen, das den programmierbaren Steuerbaustein 7 aus einem Ruhezustand Z0 aufweckt. In einem nachfolgenden Schritt 80 werden die hierfür erforderlichen Einstellungen an den programmierbaren Steuerbaustein 7 übertragen und dort gespeichert.

In einem nachfolgenden Schritt 81 wird ein Steuersignal über einen Ein-/Ausgabebaustein bereitgestellt, das der Versorgungseinrichtung 2 anzeigt, das Computersystem 1 von dem Energieversorgungsnetz 5 zu trennen. Außerdem wird in einem Schritt 82 ein Steuerbit in einem nicht-flüchtigen Speicher abgelegt, aus dem sich ergibt, dass sich das Computersystem 1 in dem Ruhezustand Z0 befindet. Danach wird im Schritt 83 ein weiteres Steuersignal an die Datenverarbeitungseinrichtung 10 des Computersystems 1 gesendet, das zur Vorbereitung des Abschaltens der Systemkomponente 3 dient. Im Schritt 84 unterbricht die Versorgungseinrichtung 2 schließlich die Stromversorgung der Systemkomponente 3 mit der Datenverarbeitungseinrichtung 10.

In einem Schritt 85 wird überprüft, ob das Computersystem nicht nur in den Bereitschaftszustand Z1, sondern in den Ruhezustand Z0 versetzt werden soll, das heißt, ob ein Steuerbit, das die Verwendung des Ruhezustandes Z0 angibt, gesetzt wurde. Ist dies der Fall, wird in einem Schritt 86 die Versorgungseinrichtung 2 von dem Energieversorgungsnetz 5 getrennt. Beispielsweise kann von dem programmierbaren Steuerbaustein 7 ein geeignetes Steuersignal erzeugt werden, um die Schaltkomponente 6 zu öffnen. Alternativ werden in einem Schritt 87 keine weiteren Handlungen vorgenommen, d. h. die Versorgungseinrichtung und somit das Computersystem 1 verbleiben in dem Bereitschaftszustand Z1.

Es wird darauf hingewiesen, dass die oben beschriebenen Ausgestaltungen nur beispielhaften Charakter haben. Insbesondere die in den Ablaufdiagrammen 5 und 6 dargestellten Verfahrensschritte können in vielfältiger Weise variiert werden. Insbesondere ist es möglich, die Reihenfolge einzelner Schritte zu ändern, diese ganz oder teilweise parallel auszuführen oder einzelne Verfahrensschritte miteinander zu kombinieren, aufzuteilen oder wegzulassen. Ebenso stellt die in der Figur 1 und der Figur 2 dargestellte Systemanordnung bzw. der dargestellte Schaltplan nur eine beispielhafte Implementierung des Computersystems 1 dar. Eine andere Zusammenfassung von Komponenten und Funktionseinheiten des Computersystems 1 ist möglich, solange die oben beschriebenen Funktionen und Zustände grundsätzlich gewahrt bleiben.

Des Weiteren ist es möglich, zusätzliche Betriebszustände des Computersystems 1 zu definieren, die energetisch zwischen dem Ruhezustand Z0, dem Bereitschaftszustand Z1 und dem Betriebszustand Z2 angeordnet sind. Beispielsweise können unterschiedliche Bereitschaftszustände definiert werden, in denen unterschiedliche Aufweckkomponenten, wie beispielsweise Timer, Kommunikationseinrichtungen und/oder lokale Schaltelemente des Computersystems 1 überwacht werden. Selbstverständlich ist auch eine Kombination der Zustände Z0, Z1, und Z2 mit den bekannten ACPI-Zuständen möglich.

### Bezugszeichenliste

- 1: Computersystem
- 2: Versorgungseinrichtung
- 3: Systemkomponente
- 4: Schaltwandler
- 5: Energieversorgungsnetz
- 6: Schaltkomponente
- 7: programmierbarer Steuerbaustein
- 8: Spannungsquelle
- 9: Echtzeituhr
- 10: Datenverarbeitungseinrichtung
- 11: Kommunikationseinrichtung
- 12: Stromversorgungsanschluss
- 13: Kommunikationsnetzwerk
- 14: erstes Schaltelement
- 15: zweites Schaltelement
- 16: UND-Gatter
- 17: Steuerschnittstelle
- 18: Busschnittstelle
- 19: BIOS-Batterie
- 20: Zusatzbatterie
- 21: Netzeingangsfilter
- 22: Gleichrichter
- 23: Strombegrenzungselement
- 24: zweites Relais
- 25: drittes Relais
- 26: Zeitfenster

- 51 bis 66: Verfahrensschritte

- 70 bis 87: Verfahrensschritte

## Patentansprüche

1. Computersystem (1), aufweisend
- wenigstens eine mit einem Energieversorgungsnetz (5) koppelbare Versorgungseinrichtung (2) mit einem programmierbaren Steuerbaustein (7) zur Versorgung des Computersystems (1) mit einer Betriebsenergie,
- wenigstens eine mit der Versorgungseinrichtung (2) gekoppelte Systemkomponente (3) mit einer Datenverarbeitungseinrichtung (10),
- wenigstens eine mit einem Kommunikationsnetzwerk (13) koppelbaren und mit der Versorgungseinrichtung (2) und der Systemkomponente (3) gekoppelten Kommunikationseinrichtung (11)
- wobei die Versorgungseinrichtung (2) dazu eingerichtet ist, in einem Betriebszustand (Z2) wenigstens die Datenverarbeitungseinrichtung (10) mit einer Betriebsenergie zu versorgen, und in einem Bereitschaftszustand (Z1) wenigstens die Kommunikationseinrichtung (11) mit einer Betriebsenergie zu versorgen, während die Datenverarbeitungseinrichtung (10) nicht mit einer Betriebsenergie versorgt wird,
**dadurch gekennzeichnet, dass**
- das Computersystem (1) wenigstens eine mit der Versorgungseinrichtung (2) gekoppelte und von dieser unabhängig betriebenen Spannungsquelle (8) zur Versorgung des programmierbaren Steuerbausteins (7) aufweist,
- die Versorgungseinrichtung (2) auch dazu eingerichtet ist, in einem Ruhezustand (Z0) weder die Datenverarbeitungseinrichtung (10) noch die Kommunikationseinrichtung (11) mit einer Betriebsenergie zu versorgen, und
- der programmierbare Steuerbaustein (7) dazu eingerichtet ist, das Computersystem (1) am Anfang eines vorbestimmten Zeitfensters (26) in den Bereitschaftszustand (Z1) zu versetzen, wenn das Computersystem (1) sich in dem Ruhezustand (Z0) befindet.

2. Computersystem (1) nach Anspruch 1,
**dadurch gekennzeichnet, dass**
der programmierbare Steuerbaustein (7) des Weiteren dazu eingerichtet ist, das Computersystem (1) am Ende des vorbestimmten Zeitfensters (26) in den Ruhezustand (Z0) zu versetzen, wenn es sich in dem Bereitschaftszustand (Z1) befindet.

3. Computersystem (1) nach Anspruch 1 oder 2,
**dadurch gekennzeichnet, dass**
die Kommunikationseinrichtung (11) eine Fernwartungsvorrichtung umfasst.

4. Computersystem (1) nach einem der Ansprüche 1 bis 3, **dadurch gekennzeichnet, dass**
die Kommunikationseinrichtung (11) in einem ersten Abschnitt des vorbestimmten Zeitfensters (26) ein Bereitschaftssignal über das Kommunikationsnetzwerk (13) an eine vorbestimmte Überwachungseinheit sendet und in einem zweiten Abschnitt des vorbestimmten Zeitfensters auf eine Anforderung der Überwachungseinheit wartet.

5. Computersystem (1) nach Anspruch 4,
**dadurch gekennzeichnet, dass**
die Versorgungseinrichtung (2) die Systemkomponente (3) und/oder die Datenverarbeitungseinrichtung (10) in dem ersten Abschnitt des vorbestimmten Zeitfensters (26) vorübergehend mit einer Betriebsenergie versorgt.

6. Computersystem (1) nach einem der Ansprüche 1 bis 5, **dadurch gekennzeichnet, dass**
der programmierbare Steuerbaustein (7) des Weiteren dazu eingerichtet ist, die Versorgungseinrichtung (2) in dem Ruhezustand (Z0) von dem Energieversorgungsnetz (5) vollständig zu trennen.

7. Computersystem (1) nach einem der Ansprüche 1 bis 6, **dadurch gekennzeichnet, dass**
die Spannungsquelle (8) einen in der Versorgungseinrichtung (2) angeordneten und mit dem Energieversorgungsnetz (5) koppelbaren Spannungswandler umfasst.

8. Computersystem (1) nach einem der Ansprüche 1 bis 7, **dadurch gekennzeichnet, dass**
die Spannungsquelle (8) einen in der Kommunikationseinrichtung (11) angeordneten und mit dem Kommunikationsnetzwerk (13) koppelbaren Spannungswandler umfasst.

9. Computersystem (1) nach einem der Ansprüche 1 bis 8, **dadurch gekennzeichnet, dass**
die Spannungsquelle (8) eine auf der Systemkomponente (3) angeordnete Batteriezelle (19) umfasst.

10. Computersystem (1) nach einem der Ansprüche 1 bis 9, **dadurch gekennzeichnet, dass**
die Spannungsquelle (8) einen Energiespeicher (20) umfasst und die Versorgungseinrichtung (2) dazu eingerichtet ist, in dem Betriebszustand (Z2) und/oder dem Bereitschaftszustand (Z1) den Energiespeicher (20) aufzuladen.

11. Computersystem (1) nach einem der Ansprüche 1 bis 10, **dadurch gekennzeichnet, dass**
der programmierbare Steuerbaustein (7) dazu eingerichtet ist, einen Spannungspegel der Spannungsquelle (8) zu überwachen und beim Abfallen des Spannungspegels unter einen vorbestimmten Grenzwert die Versorgungseinrichtung (2) aus dem Ruhezustand (Z0) in den Bereitschaftszustand (Z1) oder den Betriebszustand (Z2) zu versetzen oder eine Aktivierung des Ruhezustandes (Z0) zu verhindern.

12. Computersystem (1) nach einem der Ansprüche 1 bis 11,
**gekennzeichnet durch** ein Bedienelement (15), wobei das Bedienelement (15) dazu eingerichtet ist, die Versorgungseinrichtung (2) unabhängig von der Spannungsquelle (8) aus dem Ruhezustand (Z0) in den Bereitschaftszustand (Z1) oder den Betriebszustand (Z2) zu schalten.

13. Verfahren zum Energie sparenden Betrieb eines Computersystems (1), aufweisend eine Versorgungseinrichtung (2) mit einem programmierbaren Steuerbaustein (7), eine Systemkomponente (3) mit einer Datenverarbeitungseinrichtung (10), eine Kommunikationseinrichtung (11) und eine von der Versorgungseinrichtung (2) unabhängig betriebene Spannungsquelle (8), umfassend:
- Versetzen des Computersystems (1) in einen Ruhezustand (Z0), in dem weder die Datenverarbeitungseinrichtung (10) noch die Kommunikationseinrichtung (11) von der Versorgungseinrichtung (2) mit einer Betriebsenergie versorgt wird,
- Versorgen des programmierbaren Steuerbausteins (7) durch die unabhängig betriebene Spannungsquelle (8) in dem Ruhezustand (Z0),
- wenn das Computersystem (1) sich in dem Ruhezustand (Z0) befindet, am Anfang eines vorbestimmten Zeitfensters (26) Versetzen des Computersystems (1) durch den Steuerbaustein (7) in einen Bereitschaftszustand (Z1), in dem zumindest die Kommunikationseinrichtung (11) von der Versorgungseinrichtung (2) mit einer Betriebsenergie versorgt wird, während die Datenverarbeitungseinrichtung (10) nicht mit einer Betriebsenergie versorgt wird, und
- in dem vorbestimmten Zeitfenster (26) Überwachen eines Kommunikationsnetzwerks (13) auf an das Computersystem (1) gerichtete Anforderungen durch die Kommunikationseinrichtung (11).

14. Verfahren nach Anspruch 13,
wobei am Ende des vorbestimmten Zeitfensters (26) das Computersystem (1) in den Ruhezustand (Z0) versetzt wird, wenn es sich in dem Bereitschaftszustand (Z1) befindet.

15. Verfahren nach Anspruch 13 oder 14,
wobei das Computersystem (1) bei Erhalt einer Anforderung in einen Betriebszustand (Z2) versetzt wird, in dem wenigstens die Datenverarbeitungseinrichtung (10) durch die Versorgungseinrichtung (2) mit einer Betriebsenergie versorgt wird.

## Claims

1. Computer system (1) comprising
- at least one supply device (2) couplable with an energy supply grid (5) having a programmable control module (7) for supplying the computer system (1) with an operating energy,
- at least one system component (3) coupled with the supply device (2) and having a data processing device (10),
- at least one communications device (11) couplable with a communications network (13) and coupled to the supply device (2) and the system component (3),
- wherein the supply device (2) is configured to supply at least the data processing device (10) with operating energy in an operating state (Z2), and to supply at least the communications device (11) with an operating energy while the data processing device (10) is not supplied with an operating energy in a standby state (Z1),
**characterized in that**
- the computer system (1) comprises at least one voltage source (8) coupled to the supply device (2) and operated independently thereof for supplying the programmable control module (7),
- the supply device (2) is also configured to supply neither the data processing device (10) nor the communications device (11) with an operating energy in a hibernation state (Z0), and
- the programmable control module (7) is configured to set the computer system (1) into the standby state (Z1) at the beginning of a predetermined time window (26) when the computer system (1) is in the hibernation state (Z0).

2. The computer system (1) according to claim 1, **characterized in that**
the programmable control module (7) is further set up to place the computer system (1) in the hibernation state (Z0) at the end of the predetermined time window (26), if it is in the standby state (Z1).

3. The computer system (1) according to claim 1 or 2, **characterized in that**
the communications device (11) further comprises a remote maintenance device.

4. The computer system according to one of claims 1 to 3, **characterized in that**
the communications device (11) transmits a standby signal in a first section of the predetermined time window (26) via the communications network (13) to a predetermined monitoring unit and waits for a request from the monitoring unit in a second section of the predetermined time window.

5. The computer system (1) according to claim 4, **characterized in that**
the supply device (2) temporarily supplies the system component (3) and/or the date processing device (10) with an operating energy in the first section of the predetermined time window (26).

6. The computer system (1) according to one of claims 1 to 5, **characterized in that**
the programmable control module (7) is further set up to completely disconnect the supply device (2) from the energy supply network (5) in the hibernation state (Z0).

7. The computer system (1) according to one of claims 1 to 6, **characterized in that**
the voltage source (8) comprises a voltage converter which is arranged in the supply device (2) and capable of being coupled to the energy supply network (5).

8. The computer system (1) according to one of claims 1 to 7, **characterized in that**
the voltage source (8) comprises a voltage converter which is arranged in the communications device (11) and capable of being coupled to the communications network (13).

9. The computer system (1) according to one of claims 1 to 8, **characterized in that**
the voltage source (8) includes a battery cell (19 arranged on the system component (3).

10. The computer system (1) according to one of claims 1 to 9, **characterized in that**
the voltage source (8) comprises an energy accumulator (20), and the supply device (2) is set up to charge the energy accumulator (20) in the operating state (Z2) and/or the standby state (Z1).

11. The computer system (1) according to one of claims 1 to 10,
**characterized in that**
the programmable control module (7) is set up to monitor a voltage level of the voltage source (8) and, if the voltage level falls below a predetermined limit value, to shift the supply device (2) from the hibernation state (Z0) to the standby state (Z1) or the operating state (Z2), or to prevent an activation of the hibernation state (Z0).

12. The computer system (1) according to one of claims 1 to 11, **characterized by** an operating element (15), wherein the operating element (15) is set up to shift the supply device (2) from the hibernation state (Z0) into the standby state (Z1) or the operating state (Z2) independent of the voltage source (8).

13. A method for energy-saving operation of a computer system (1), comprising a supply device (2) with a programmable control module (7), a system component (3) with a data-processing device (10), a communications device (11) and a voltage source (8) operated independently of the supply device (2), the method comprising:
- putting the computer system (1) into a hibernation state (Z0) in which neither the data-processing device (10) nor the communications device (2) is supplied with an operating energy by the supply device (2);
- supplying the programmable control module (7) during the hibernation state (Z0) by means of the independently operated voltage source (8),
- if the computer system (1) is in the hibernation state (Z0), at the beginning of a predetermined time window (26), shifting the computer system (1) into a standby state (Z1) by means of the control module (7), in which at least the communications device (11) is supplied with an operating energy by the supply device (2) while the data-processing device (10) is not supplied with an operating energy, and
- in the predetermined time window (26), monitoring a communications network (13) for requests addressed to the computer system (1) by means of the communications device (11).

14. The method according to claim 13,
wherein the computer system (1) is placed into the hibernation state (Z0) at the end of the predetermined time window (2), if it is in the standby state (Z1).

15. The method according to claim 13 or 14,
wherein the computer system (1), upon receipt of a request, is placed into an operating state (Z2), at least the data-processing device (10) being supplied with an operating energy by the supply device (2) during the operating state.

## Revendications

1. Système informatique (1) comprenant
- au moins un dispositif d'alimentation (2) pouvant être couplé à un réseau d'alimentation en énergie (5), avec un module de commande programmable (7) destiné à l'alimentation du système informatique (1) avec une énergie de fonctionnement,
- au moins un composant de système (3) couplé au dispositif d'alimentation (2) avec un dispositif de traitement de données (10),
- au moins un dispositif de communication (11) pouvant être couplé à un réseau de communication (13) et soit couplé au composant de système (3) et au dispositif d'alimentation (2),
- le dispositif d'alimentation (2) étant configuré de façon à alimenter, en un mode de fonctionnement (Z2), une énergie de fonctionnement au moins au dispositif de traitement de données (10), et à alimenter, en mode d'attente (Z1), une énergie de fonctionnement au moins au dispositif de communication (11) alors qu'aucune énergie de fonctionnement n'alimente le dispositif de traitement de données (10),
**caractérisé en ce que**
- le système informatique (1) présente au moins une source de tension (8) couplée au dispositif d'alimentation (2) et opérée indépendamment de ce dernier, destinée à alimenter le module de commande programmable (7),
- le dispositif d'alimentation (2) étant également configuré de façon à ne pas alimenter, en un mode de veille (Z0), une énergie de fonctionnement au dispositif de traitement de données (10) ou au dispositif de communication (11) et
- le module de commande programmable (7) étant configuré de façon à régler le système informatique (1) au début d'une fenêtre de temps prédéterminée (26) en mode d'attente (Z1) lorsque le système informatique (1) se trouve en mode de veille (Z0).

2. Système informatique (1) selon la revendication 1, **caractérisé, en ce que**
le module de commande programmable (7) est en outre configuré de façon à régler le système informatique (1) à la fin de la fenêtre de temps prédéterminée (26) en mode de veille (Z0), lorsque ce système se trouve en mode d'attente (Z1).

3. Système informatique (1) selon la revendication 1 ou 2, **caractérisé en ce que**
le dispositif de communication (11) comprend un dispositif de maintenance à distance.

4. Système informatique (1) selon l'une quelconque des revendications 1 à 3,
**caractérisé en ce que**
le dispositif de communication (11) transmet dans une première partie de la fenêtre de temps
prédéterminée (26) un signal d'attente à une unité de surveillance prédéterminée au moyen du réseau de communication (13), et dans une seconde partie de la fenêtre de temps prédéterminée attend une demande de l'unité de surveillance.

5. Système informatique (1) selon la revendication 4, **caractérisé en ce que**
dans la première partie de la fenêtre de temps prédéterminée (26), le dispositif d'alimentation (2) alimente temporairement le composant de système (3) et/ou le dispositif de traitement de données (10) avec une énergie de fonctionnement.

6. Système informatique (1) selon l'une quelconque des revendications 1 à 5,
**caractérisé en ce que**
le module de commande programmable (7) est en outre configuré de façon à séparer complètement le dispositif d'alimentation (2) du réseau d'alimentation en énergie (5) en mode de veille (Z0).

7. Système informatique (1) selon l'une quelconque des revendications 1 à 6,
**caractérisé en ce que**
la source de tension (8) comprend un convertisseur de tension agencé dans le dispositif d'alimentation (2) et pouvant être couplé au réseau d'alimentation en énergie (5).

8. Système informatique (1) selon l'une quelconque des revendications 1 à 7,
**caractérisé en ce que**
la source de tension (8) comprend un convertisseur de tension agencé dans le dispositif de communication (11) et pouvant être couplé au réseau de communication (13).

9. Système informatique (1) selon l'une quelconque des revendications 1 à 8,
**caractérisé en ce que**
la source de tension (8) comprend un élément de batterie (19) agencée sur le composant de système (3).

10. Système informatique (1)
selon l'une quelconque des revendications 1 à 9, **caractérisé en ce que**
la source de tension (8) comprend un accumulateur d'énergie (20) et **en ce que** le dispositif d'alimentation (2) est configuré de façon à charger l'accumulateur d'énergie (20) en mode de fonctionnement (Z2) et/ou en mode d'attente (Z1).

11. Système informatique (1) selon l'une quelconque des revendications 1 à 10,
**caractérisé en ce que**
le module de commande programmable (7) est configuré de façon à surveiller un niveau de tension de la source de tension (8) et, en cas de chute du niveau de tension en dessous d'une valeur seuil prédéterminée, à régler le dispositif d'alimentation (2) du mode de veille (Z0) vers le mode d'attente (Z1) ou vers le mode de fonctionnement (Z2) ou à empêcher l'activation du mode de veille (Z0).

12. Système informatique (1) selon l'une quelconque des revendications 1 à 11,
**caractérisé par** un élément de commande (15), l'élément de commande (15) étant configuré de façon à commuter le dispositif d'alimentation (2) indépendamment de la source de tension (8) du mode de veille (Z0) vers le mode d'attente (Z1) ou vers le mode de fonctionnement (Z2).

13. Procédé destiné à un fonctionnement à économie d'énergie d'un système informatique (1) comprenant un dispositif d'alimentation (2) pourvu d'un module de commande programmable (7), d'un composant de système (3) présentant
un dispositif de traitement de données (10), un dispositif de communication (11) et une source de tension (8) actionnée indépendamment du dispositif d'alimentation (2), comprenant :
- basculement du système informatique (1) vers un mode de veille (Z0), dans lequel ni le dispositif de traitement de données (10) ni le dispositif de communication ne sont alimentés en énergie de fonctionnement par le dispositif d'alimentation (2),
- alimentation du module de commande programmable (7) par l'intermédiaire de la source de tension (8) actionnée de manière indépendante en mode de veille (Z0),
- lorsque le système informatique (1) se trouve en mode de veille (Z0), au début d'une fenêtre de temps prédéterminée (26), basculement du système informatique (1) par l'intermédiaire du module de commande (7) vers un mode d'attente (Z1), dans lequel au moins le dispositif de communication (11) est alimenté en énergie de fonctionnement par le dispositif d'alimentation (2) alors que le dispositif de traitement de données (10) n'est quant à lui pas alimenté en énergie de fonctionnement, et
- surveillance d'un réseau de communication (13) dans la fenêtre de temps prédéterminée (26) en termes de demandes adressées au système informatique (1) au moyen du dispositif de communication (11).

14. Procédé selon la revendication 13,
le système informatique (1) étant basculé à la fin de la fenêtre de temps prédéterminée (26) vers le mode de veille (Z0) lorsqu'il se trouve en mode d'attente (Z1).

15. Procédé selon la revendication 13 ou 14,
le système informatique (1) bascule lors de la réception d'une demande en mode de fonctionnement (Z2) dans lequel le dispositif de traitement de données (10) est au moins alimenté en une énergie de au moyen du dispositif d'alimentation (2).
